# EUROPEAN PATENT APPLICATION

(11) **EP 1 288 793 A1**
(43) Date of publication of application: **05.03.2003**
(21) Application number: 01120443.5
(22) Date of filing: 27.08.2001
(51) Int. Cl.: G06F 17/30, G06F 17/28

(54) **Translation text management system**

(71) Applicant: Sony NetServices GmbH, 5081 Anif (AT)
(72) Inventor: Stückler, Jörg c/o Sony NetService GmbH, 5081 Anif (AT); La Rose. Timothy c/o Sony NetServices GmbH, 5081 Anif (AT); Wenninger, Christian c/o Sony NetServices GmbH, 5081 Anif (AT)
(74) Representative: Müller - Hoffmann & Partner

(57) **Abstract**

A translation text management system, comprises an interactive translation creating environment, including a text master input means for supplying the translation text management system with master text units to be translated, a translation text input means for supplying the translation text management system with translation text units of the master text units, and a text interface for accessing the master text units and translation text units supplied to the translation text management system, wherein the interactive translation creating environment comprises functionality for assigning text unit identifying variables to the master text units and the translation text units, respectively, and the text interface comprises functionality for providing master text units and/or the translation text units supplied to the translation text management system in dependence of their respective text unit identifying variables according to changing request information supplied to the translation text management system via the text interface.

## Description

The invention relates to a translation text management system, a web file and a method of dynamically adapting a web page to different languages.

In recent years, it has become common among companies to use the Internet as a platform to present their products. This presentation is usually based upon web pages which can be downloaded from a companies web server.

Since companies usually sell their products in different countries, a product web page may have to be provided in different languages, respectively. However, the effort to maintain all those web pages can be very high, since the content of the web pages, in particular text passages may have to be changed very often. For example, one single change in the description text of a product presented on a web page may lead to respective changes in the translation text passages of the corresponding web pages. This is a time consuming procedure for web designers and translation teams. Another problem is that, if a change in a text passage of a web page has been done, it might be forgotten to update all web pages containing a translation of this text passage. For example, it might be forgotten to change the text of a web page in French language, when the text of the English version has been changed.

To facilitate the maintenance of web pages in different languages, it is known to use translation text management systems which allow to centralize coordination and version control of different translations. A translator can check out a specific translation, change it and check in again the changed translation as a new translation version. However, if a change in a text passage has to be done, the translator has to check out all corresponding translations, to change the translations accordingly, and to check in again the changed translations, which is a time consuming process.

It is an object of the invention to provide a translation text management system being suitable to maintain web pages of different languages with only requiring little maintaining effort.

To solve this object, the present invention provides a translation text management system according to claim 1. Further, the present invention provides a web file according to claim 11. Finally, a method of dynamically adapting a web page to different languages and/or images according to claim 17 is provided. Further preferred embodiments of the present invention are described in the respective subclaims. A computer program product according to the present invention is defined in claim 20.

The translation text management system according to the present invention comprises:
- an interactive translation creating environment, having a text master input means for supplying the translation text management system with master text units to be translated, and a translation text input means for supplying the translation text management system with translation text units of the master text units,
- a text interface for accessing the master text units and translation text units which have been supplied to the translation text management system, wherein
- the interactive translation creating environment comprises functionality for assigning text units identifying variables to the master text units and the translation text units, respectively, and
- the text interface comprises functionality for providing master text units and/or a translation text units supplied to the translation text management system in dependence of their respect text unit identifying variables according to changing request information supplied to the translation text management system via the text interface.

A basic idea of the present invention is that the text to be visualised on a web page is split into text units, wherein each of these text units is identified by a text unit identifying variable assigned thereto. Programmers of web pages then have the possibility of avoiding to use the pure text itself in the web code when programming a web page, and to replace at least parts of the text by corresponding text unit identifying variables. If a translation of a text unit (in the following referred to as translation text unit) is needed in order to adapt a web page to a different language, the programmer or functionality in the web code can request corresponding text units from the translation text management system by simply sending changing request information to the text interface of the translation text management system. The changing request information contains text unit identifying variables specifying the requested text units (which may be master text units or translation text units) needed to adapt the web page to the desired language. The translation text management system determines if a translation text unit or master text unit has already been assigned by the translation text management system to the text unit identifying variables contained in the changing request information, and provides corresponding translation text units or master text units via the text interface, if available.

The web code has functionality to "replace" the text unit identifying variables in the web code by text units or text code units which may be already available in the web code or received from the translation text management system (changing information), and can therefore automatically adapt the text on the web page to a text conforming with a specific text version stored in the translation text management system. This means that the desired text version to be visualized on a web page is specified by the text unit identifying variables in the web code. The complete process of maintaining the text is coordinated by the translation text management system. Thus, the web code does not have to be changed, if a change in a text unit is done. The web code just has to request text unit changing information from the translation text management system which contains all information to adapt itself to a new text version.

The master text units as well as the translation text units may be supplied by a remote translation team to the translation text management system (in the following only referred to as management system) via a communication network or may be directly entered within the management system by a local user.

Preferably, the translation text units and the master text units are provided via the text interface as parts of includes files. The include files comprise assignments between the text unit identifying variables and the corresponding master text units and/or translation text units, respectively. The include files may be regarded as text unit changing information, as will become apparent in the later description. If, for example, in an include file, a text unit identifying variable (in the following only referred to as identifying variable) WEL-COME_English is assigned to a master text unit "Welcome to our homepage", a corresponding translation text unit "Willkommen auf unserer Startseite" in German language may be assigned to a identifying variable WELCOME_German. Therefore, if a programmer of a web page uses a language independent identifying variable WELCOME, and a user wants the text of the web page to appear in English, the functionality of the web file can use the assignment information of the include file and assign the content of WELCOME_English to WELCOME. If the text of the web page has to appear in German language, the functionality of the web file can assign the content of WELCOME_German to WELCOME. Alternatively, if the web file does not find desired assignment information like WELCOME_German in the include file already incorporated into the web file, the web file can ask the management system (which means that changing request information is sent from the web file to the management system) what the translation text unit assigned to WELCOME_German is. This text unit changing information may then be received by the web file as new include file.

In a preferred embodiment, the text interface comprises include file generating means for generating the include files in dependence of the changing request information by assembling all available translation text units and master text units being matched by the changing request information to obtain respective include files. In other words, the include file generating means which preferably comprise Active Server Pages (ASP) and/or Java Server Pages (JSP) and/or Private Home Page Tools (PHP) and/or Java Resource Bundles and/or Extensible Markup Language Tools (XML) and/or any combination thereof create "on the fly" include files containing all information in form of assignments requested via the text interface by a local application/user or a remote application/user.

The text interface preferably is a web interface, which means that it can communicate via a communication network like the internet with web applications. The text interface may also be an interface for communicating with an application running on the same computer or an application in a LAN (Local Area Network).

Since the content of the include files may change if new master text units and/or translation text units and/or corresponding identifying variables are added, it may be advantageous that the translation text management system comprises adapting means for adapting/creating the include file generating means in dependence of available master text units and translation text units and corresponding identifying variables. For example, an ASP script which generates the include files may be generated/changed itself by the adapting means in dependence of available master text units and translation text units and corresponding identifying variables. The functionality of the adapting means may be included into the include file generating means itself, which means that in this case the include file generating means has the capability to adapt its include file generating mechanism itself.

The management system preferably comprises a storage means for storing in particular master text units and/or translation text units and/or generated include files and/or other information correlated thereto. The storage means may include, for example, a data base system. This means that the include files and the include file generating means can easily be created/adapted at any time according to the content of the data base being maintained by the translation text management system. Thus, the database acts like an (data-) interface between the translation creating process and the corresponding include file generating process. The task of for example ASP or JSP preferably is to control/connect the include files with the database and to write something FLASH can understand.

The translation text management system described above has the advantage that it can be used by all parties involved in a web program project of any program language to automatically manage translations needed for the web project. Web programmers use this system in the creation of their web code by replacing at least a part of the text used on the web pages with text unit identifying variables. To adapt their web code to a different language, the management system is contacted in order to receive text unit changing information. For example, an include file automatically generated and updated by the translation text management system or individually assembled "on the fly" is then downloaded from the management system and can be integrated into the web code.

In order to find out identifying variables supported by the management system, the management system comprises a remote login interface enabling a remote user to access the interactive translation creating environment via a communication network, wherein the interactive translation creating environment comprises browsing functionality allowing the user to navigate through the content of the storage means, i.e., the master text units and/or translation text units and/or include files and/or other content correlated information. Therefore, the programmer can log into the management system and for example select the text unit identifying variables and translations already existing for this project. Further, he can create them on his own if they do not exist. In any case, all translation work being done by different translators will be synchronised by the use of the centralised translation text management system according to the present invention.

To use the translation text management system, the present invention provides a web file, comprising
- a plurality of text unit identifying variables concatenated together in a certain order,
- a plurality of text code units assignable to the text unit identifying variables,
- functionality for concatenating together the text code units assigned to the concatenated text unit identifying variables in said certain order to obtain web target text code visualizable as text on a web page,
- functionality to create/change assignments between the text unit identifying variables and the text code units included in the web file according to text units changing information, and
- a first interface for requesting and/or receiving text unit changing information.

The text code units contain text units and other web specific code like HTML code used for example to determine the height or the boldness of the text of the web page. The concatenation of identifying variables serves as an abstract symbolisation of the text to be displayed. For example, if a first identifying variable is assigned to a text code unit containing the text "Welcome to our homepage.", and a second identifying variable is assigned to the text unit begin "Please click here to obtain further information.", then a concatenation of <first identifying variable> <second identifying variable> yields the text "Welcome to our homepage. Please click here to obtain further information.", whereas the concatenation of <second identifying variable> <first identifying variable> yields the text begin "Please click here to obtain further information. Welcome to our homepage.". In other words, the concatenation order of identifying variables corresponds to the order of the text units finally visible on the web page.

As already described in the above description, to change the text of the web page, the assignments between the identifying variables and the corresponding text code units in the corresponding web file have to be changed on the basis of the text unit changing information.

Preferably, the web file comprises a second interface for receiving controlling information according to which the functionality of the web file is controllable.

For example, the web page may include a language selection box enabling the user to switch between different languages of the web page. The language selection results may then be sent to the second interface of the web file, wherein the web file itself adapts the language of the web page by using the functionality of the web file described above.

At least parts of the functionality of the web file are realised in the programming language FLASH. FLASH is a web animation producer using vector based graphics and having small file sizes. It provides interactive animations, links, and sounds. Most functions are available on the web. In particular, the functionality to create/change assignments between the identifying variables and the text code units as well as the functionality for concatenating together the text code units assigned to the concatenated identifying variables are advantageably realised in FLASH. Moreover, the first interface for requesting and receiving text unit changing information may be based upon FLASH.

An important aspect is that the invention provides a content management system (CMS) that outputs content to/into a FLASH file. Not a FLASH file itself is outputted, but content is outputted directly into a FLASH file. This enables to save a lot of work, since only one FLASH file has to be handled, and not a broad variety of FLASH files.

Preferably, the text unit changing information is insertable into the web file as include file. That is, the web file is capable of requesting an include file containing assignments between the identifying variables and the corresponding text units via the first interface. The first interface may also serve for incorporating the received include file into the web file, which interprets the information contained within the include file.

The management system may further comprise:
- an interactive image creating environment, including an image master input means for supplying the translation text management system with master image units, and a translation image input means for supplying the translation text management system with translation image units of the master image units, and
- an image interface for accessing the master image units and translation image units supplied to the translation text management system, wherein the interactive image creating environment comprises functionality for assigning image unit identifying variables to the master image units and the translation image units, respectively, and
- the image interface comprises functionality for providing master image units and/or the translation image units supplied to the translation text management system in dependence of their respective image unit identifying variables according to changing request information supplied to the translation text management system via the image interface.

The functionality described above of the management system to handle images (image code of a web page) is very similar to the functionality to handle translations, since text code and image code can be managed in a very similar manner. "Translation image units" in this context means image units (which may also comprise text within the image unit, respectively) designed for a specific language and corresponding to a "master image unit" (an image unit designed for a language being different from those of the translation text units), respectively. For example, if due to a language selection on a web page an image of a German flag (master image unit) has to be changed to an image of an English flag, the web page can demand the corresponding translation image unit (English flag) by sending corresponding changing request information to the image interface. The interactive image creating environment, in particular the image master input means and the translation image input means may comprise an image code reading/input means or an image creating means like a image drawing program. The image interface and the text interface may be identical.

Accordingly, the web file may comprise a plurality of image unit identifying variables concatenated together in a certain order, a plurality of image code units assignable to the image unit identifying variables, functionality for concatenating together the image code units assigned to the concatenated image unit identifying variables in said certain order to obtain web target image code visualizable as image or as a part of an image on a web page, functionality to create/change assignments between the image unit identifying variables and the image code units included in the web file according to image unit changing information, and a first interface for requesting and/or receiving image unit changing information.

The present invention further provides a method of dynamically adapting a web page located on a client like a users computer to different languages and/or images, which comprises the following steps:
- sending language selecting information to the second interface of a web file according to the present invention which is assigned to the web page, wherein the web file analyzes which web text units and/or web image units of the web page need to be adapted according to the language selecting information,
- sending a changing request information containing information about the web text units and/or web image units to be adapted from the web page to the interface of a translation text management system according to the present invention, wherein
- the translation text management system sends changing information containing available translation text units/translation image units of the web text units/web image units to be translated/changed to the web file, wherein
- the web file processes the received translation text units/translation image units, thereby changing the assignments between the text unit identifying variables/image unit identifying variables and the text code units/image code units according to the changing information and visualizes a new resulting web target text code/web target image code.

The changing request information preferably comprises identifying variables whose corresponding web text/image units are to be translated/changed, and a language parameter telling the management system the desired language to be adapted on the web page. Further, the text/image unit changing information preferably comprises include files comprising assignments between the text/image identifying variables whose corresponding web text/image units are to be translated/changed, and corresponding translation text/image code units.

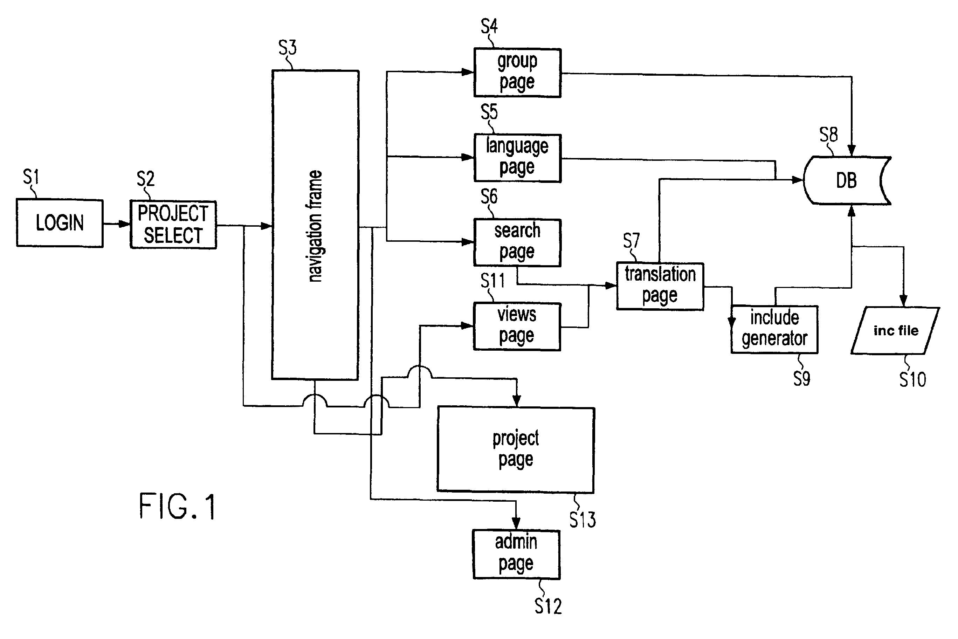

Further preferred embodiments and advantages of the present invention will be described in the following detailed description in conjunction with the accompanying drawings, wherein
**Fig. 1** shows a flow charge of a preferred embodiment of a translation text management system according to the present invention;
**Fig. 2** a schematic drawing illustrating how to dynamically adapt a web page to different languages according to a first embodiment of the present invention.
**Fig. 3** a schematic drawing illustrating a second example how to dynamically adapt a web page to different languages according to a second embodiment of the present invention.

To use the translation text management system, the user logs into the system in a first step S1. Then, in a second step S2 the user selects the project he/she is assigned to. Every group of translations has a project assigned to it. This prevents confusion and ensures clarity for each user involved.

Several user levels are available. These levels insure that only certain users can access certain sections of the management system and can perform certain tasks. Every login and attempted login is recorded in a database of the management system to create accountability.

Then, in a third step S3, the user can switch between certain tasks via a navigation frame. The user may for example decide to supply new identifying variables to the management system. In this case, he may visit an interactive translation creating environment, for example a group page providing a graphical user interface for supplying new identifying variables into the database system of the management system in a fourth step S4.

Alternatively, the user may decide in a fifth step S5 to create the possibility to use new languages. For example, the user may decide that besides German translations of an English master text also French translations are allowed. This may then be entered on an interactive language page.

The user may also visit in a sixth step S6 a search page containing browser functionality for navigating through already existing master text units and/or translation text units and already available identifying variables.

The user supplies the management system with master text units to be translated or with translation text units of the master text units in a seventh step S7. To do this, the management system may for example comprise a text master input means or a translation text input means for supplying respective master text units and translation text units. "Master text units" do not have necessarily to be restricted upon one single language. It is also possible that each master text unit is written in a different language. In general, if a text unit is entered the first time into the management system, then this text unit is the master text unit regardless of the respective language. In other words, all translation projects are assigned with languages dynamically, and the master language can be anyone of these. The text master input means and the translation text input means may for example be realised as an interactive language page. The size of the text units may range from one single character up to thousands of characters. If the user has found a certain text unit he is searching for, he may view or change the text unit. To do the tasks of the seventh step S7, the management system provides interactive translation pages.

All new identifying variables, new master text units and new translation text units as well as every changes of already existing identifying variables, master-text units and translation text units are stored in a database system in an eighth step S8. This enables the translation team to monitor the "history" of the translation text units.

The result of the translation pages as well as contents of the database system are inputted into an include generator in a ninth step S9, which generates include files and stores them in a tenth step S10 in a separate storage or in the database system.

The graphical user interface on the translation page may be influenced by certain settings done by the user in an eleventh step S11. For example, the user may decide to only get English instructions during the third to seventh step S3 to S7. Most projects will contain multiple languages and sometimes hundreds or even thousands of translations. Therefore, the user is allowed via the views page to view existing data in the projects in several ways. For example, the data can be viewed by language, missing translations amount of rows of text units and certain orders of the user's choice.

The administrator can create users and assign user levels to those users in a twelfth step S12.

Project leaders and administrators can create new projects and assign existing users to those projects in a thirteenth step S13. They can also assign languages to those projects. If a necessary language does not exist, project leaders and administrators can create them using the language page.

The login system of the management system allows the translation text units to be approved by content experts and legal departments before the translations are submitted to be used on a live website. These involved parties can sit anywhere in the world. Once the translator has finished creating, editing or deleting translations, he submits a confirming signal to the management system, which in response generates a corresponding include file. The include file is preferably realized in JSP, ASP or FLASH. However, any other programming language may also be used.

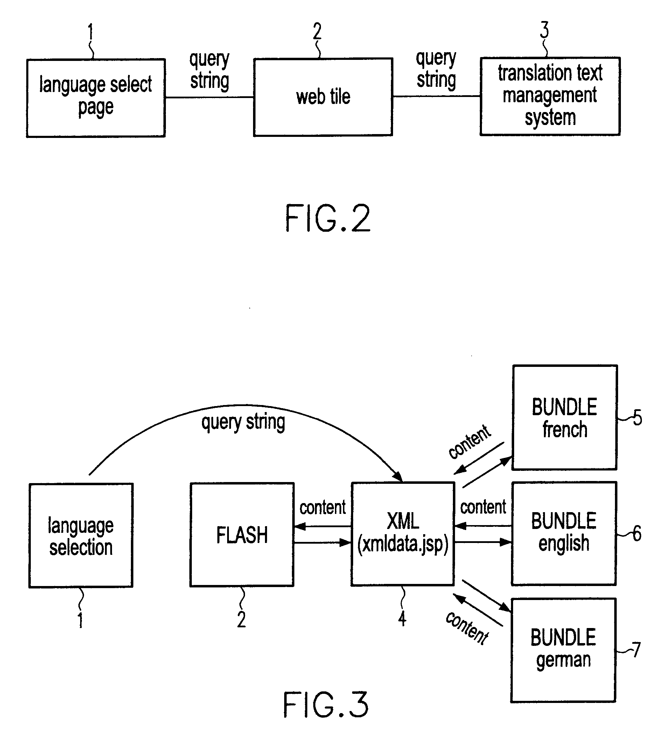

Referring to Fig. 2, in the following description a first example of a mechanism of an adapting process of a web page from a first language to a second language will be described.

First, the user visits a language select page 1 for selecting a desired language. The language selection page may for example realized as input mask in form of a graphical user interface supported by the web page currently visited by the user. Then, the language select page 1 sends a first query string containing language selecting information to a web file 2, into which a FLASH document is included. The flash document interprets the first query string sent from the language select page 1, finds out what text units need to be adapted and sends a corresponding second query string containing changing request information like a language parameter or identifying variables of text units to be translated to the management system 3, which interprets the second query string and submits a corresponding include file containing text unit changing information back to the FLASH document within the web page 2, wherein the FLASH document processes the data of the received include file and presents (visualizes) the processed data.

Referring to Fig. 3, in the following description a second example of a mechanism of an adapting process of a web page from a first language to a second language will be described.

First, the user visits a language select page 1 for selecting a desired language. Then, the language select page 1 sends a query string containing language selecting information to a XML-page 4 which interprets the query string. The XML-page 4 communicates with the FLASH file 2 to find out what text units/image units need to be adapted and assembles a corresponding FLASH include file on the basis of contents of French bundles 5, English bundles 6 and German bundles 7 (of course there may be taken into account further bundles, too), said bundles being generated and maintained by the management system. The FLASH include file is submitted by the XML-page 4 to the FLASH document 2, wherein the FLASH document 2 processes the data of the received include file and presents (visualizes) the processed data.

The translation text management system may be realized in hardware or as a computer program product.

## Claims

1. Translation text management system, comprising:
- an interactive translation creating environment, including:
a) a text master input means for supplying the translation text management system with master text units to be translated,
b) a translation text input means for supplying the translation text management system with translation text units of the master text
units, and
- a text interface for accessing the master text units and translation text units supplied to the translation text management system,
**characterized in that**
- the interactive translation creating environment comprises functionality for assigning text unit identifying variables to the master text units and the translation text units, respectively, and
- that the text interface comprises functionality for providing master text units and/or the translation text units supplied to the translation text management system in dependence of their respective text unit identifying variables according to changing request information supplied to the translation text management system via the text interface.

2. Translation text management system according to claim 1, **characterized in that** the translation text units and the master text units are provided by the text interface as include files, the include files comprising assignments between the text unit identifying variables and the corresponding master text units and/or translation text units.

3. Translation text management system according to claim 2, **characterized in that** the text interface comprises include file generating means for generating the include files in dependence of the changing request information by assembling all available translation text units and master text units being matched by the changing request information to obtain respective include files.

4. Translation text management system according to claim 3, **characterized in that** the include file generating means comprises Active Server Pages and/or Java Server Pages and/or Private Home Page Tools (PHP) and/or Java Resource Bundles and/or Extensible Markup Language Tools (XML) and/or any combination thereof.

5. Translation text management system according to claim 3 or 4, **characterized by** adapting means for adapting/creating the include file generating means in dependence of available master text units and translation text units and corresponding text unit identifying variables.

6. Translation text management system according to anyone of the preceding claims, **characterized by** a storage means for storing in particular master text units and/or translation text units and/or include files and/or other content correlated information.

7. Translation text management system according to claim 6, **characterized in that** the storage means comprises a database system.

8. Translation text management system according to claims 6 or 7, **characterized in that** the interactive translation creating environment comprises browsing functionality allowing a user to navigate through the content of the storage means.

9. Translation text management system according to anyone of the preceding claims, **characterized by** a remote login interface enabling a remote user to access the interactive translation creating environment via a communication network.

10. Translation text management system according to anyone of the preceding claims, **characterized by:**
- an interactive image creating environment, including:
a) an image master input means for supplying the translation text management system with master image units,
b) a translation image input means for supplying the translation text management system with translation image units of the master image units, and
- an image interface for accessing the master image units and translation image units supplied to the translation text management system, wherein
- the interactive image creating environment comprises functionality for assigning image unit identifying variables to the master image units and the translation image units, respectively, and
- the image interface comprises functionality for providing master image units and/or the translation image units supplied to the translation text management system in dependence of their respective image unit identifying variables according to changing request information supplied to the translation text management system via the image interface.

11. Web file, comprising:
- a plurality of text unit identifying variables concatenated together in a certain order,
- a plurality of text code units assignable to the text unit identifying variables,
- functionality for concatenating together the text code units assigned to the concatenated text unit identifying variables in said certain order to obtain web target text code visualizable as text on a web page,
- functionality to create/change assignments between the text unit identifying variables and the text code units included in the web file according to text unit changing information, and
- a first interface for requesting and/or receiving text unit changing information.

12. Web file according to claim 11, **characterized by** a second interface for receiving controlling information according to which the functionality of the web file is controllable.

13. Web file according to claim 11 or 12, **characterized in that** at least parts of the functionality of the web file is realized in FLASH.

14. Web file according to anyone of the claims 11 or 13, **characterized in that** that the text unit changing information is insertable into the web file as include file.

15. Web file according to anyone of the claims 11 or 14, **characterized in that** that the include file comprises text code units and assignments between the text unit identifying variables and the corresponding text code units.

16. Web file according to anyone of the claims 11 or 15, comprising:
- a plurality of image unit identifying variables concatenated together in a certain order,
- a plurality of image code units assignable to the image unit identifying variables,
- functionality for concatenating together the image code units assigned to the concatenated image unit identifying variables in said certain order to obtain web target image code visualizable as image or as a part of an image on a web page,
- functionality to create/change assignments between the image unit identifying variables and the image code units included in the web file according to image unit changing information, and
- a first interface for requesting and/or receiving image unit changing information.

17. Method of dynamically adapting a web page located on a client to different languages and/or images, **characterized by**
- sending language selecting information to the second interface of a web file according to anyone of the claims 11 to 16 assigned to the web page, wherein the web file analyzes which web text units and/or web image units of the web page need to be adapted according to the language selecting information,
- sending a changing request information containing information about the web text units and/or web image units to be adapted from the web page to the interface of a translation text management system according to anyone of the claims 1 to 10, wherein
- the translation text management system sends changing information containing available translation text units/translation image units of the web text units/web image units to be translated/changed to the web file, wherein
- the web file processes the received translation text units/translation image units, thereby changing the assignments between the text unit identifying variables/image unit identifying variables and the text code units/image code units according to the changing information and visualizes a new resulting web target text code/web target image code.

18. Method according to claim 17, **characterized in that** the changing request information comprises text identifying variables/image identifying variables whose corresponding web text units/web image units are to be translated, and a language parameter.

19. Method according to claim 17 or 18, **characterized in that** the text/image unit changing information comprises include files comprising assignments between the text/image identifying variables whose corresponding web text/image units are to be translated, and corresponding translation text/image code units.

20. Computer program product comprising computer product means adapted to run a translation text management system according to anyone of the claims 1 to 10.
